(19) Europäisches Patentamt
European Patent Office
Office européen des brevets

(11) Veröffentlichungsnummer: **0 388 847 A2**

(12) # EUROPÄISCHE PATENTANMELDUNG

(21) Anmeldenummer: **90105128.4**

(51) Int. Cl.$^5$: **H01B 3/30, C09D 177/00**

(22) Anmeldetag: **19.03.90**

(30) Priorität: **22.03.89 DE 3909483**

(43) Veröffentlichungstag der Anmeldung: **26.09.90 Patentblatt 90/39**

(84) Benannte Vertragsstaaten: **BE CH DE ES FR GB IT LI NL SE**

(71) Anmelder: **BASF Lacke + Farben Aktiengesellschaft**
**Max-Winkelmann-Strasse 80**
**D-4400 Münster(DE)**

(72) Erfinder: **Hoessel, Peter, Dr.**
**Salierstrasse 71**
**D-6707 Schifferstadt(DE)**
Erfinder: **Boerzel, Paul, Dr.**
**Juethornstrasse 55a**
**D-2000 Hamburg 70(DE)**
Erfinder: **Lienert, Klaus, Dr.**
**Bernadottestrasse 54**
**D-2000 Hamburg 50(DE)**
Erfinder: **Lehmann, Helmut**
**Hasenstieg 5**
**D-2057 Rheinbek(DE)**

(74) Vertreter: **Springer, Hans Jörg, Dr. et al**
**BASF Aktiengesellschaft Patentabteilung**
**ZNP - C 6 Carl-Bosch-Strasse 38**
**D-6700 Ludwigshafen(DE)**

(54) **Verfahren zur Herstellung hitzehärtbarer Schmelzklebelacklösungen mit hoher Verbackungsfestigkeit und deren Verwendung.**

(57) Die vorliegende Erfindung betrifft ein Verfahren zur Herstellung lagerstabiler Schmelzklebelacklösungen für die Beschichtung von mit Elektroisolierlack beschichteten Drähten, dadurch gekennzeichnet, daß man

A) 10 bis 50 Gew.% eines Polyamids und

B) 1 bis 30 Gew.% eines Bismaleinimides in

C) 20 bis 89 Gew.% eines organischen Lösungsmittels bei Temperaturen von 20 bis 180 °C unter fortwährender Durchmischung löst.

EP 0 388 847 A2

# Verfahren zur Herstellung hitzehärtbarer Schmelzklebelacklösungen mit hoher Verbackungsfestigkeit und deren Verwendung

Die vorliegende Erfindung betrifft ein Verfahren zur Herstellung von Schmelzklebelacklösungen durch Lösen eines Polyamids und eines Bismaleinimides in einem organischen Lösungsmittel und deren Verwendung zur Beschichtung von Elektroisolierdrähten.

Hitzehärtbare Schmelzklebelacke, sogenannte Backlacke, werden für die Herstellung mechanisch und thermisch beanspruchter Wickelkörper aus mit Lack isolierten Drähten verwendet, deren Windungen mit Hilfe von äußerer Wärmezufuhr oder durch Stromwärme durch Schmelzen und nachfolgendes Verfestigen einer solchen Backlackschicht miteinander verklebt (verbackt) werden.

Als Backlacke kommen bisher zwei unterschiedliche Typen zum Einsatz: Thermoplastische und duromere Systeme.

Die Verwendung thermoplastischer Polymere ist beispielsweise in den US-PS 3 975 571, US-PS 3 953 649, DE-A 2 341 191 beschrieben. Als wesentlicher Nachteil sind die niedrigen Wiedererweichungstemperaturen, die geringen, unwirtschaftlichen Festgehalte und die geringe Lösungsmittelbeständigkeit zu nennen. Höhere Wiedererweichungstemperaturen erfordern hohe Verbackungstemperaturen und schränken deshalb die Verwendung wegen der thermischen Empfindlichkeit z.B von Nutisolationsmaterialien ein.

Duromere, hitzehärtbare Backlacke gehen beim Verbacken durch eine Vernetzungsreaktion aus einem thermoplastischen Zustand in den ausgehärteten Endzustand über.

Bisher bekannte, kommerziell erhältliche und bei Backlacken angewandte Vernetzungsreaktionen weisen ebenfalls noch zu niedrige Wiedererweichungstemperaturen und zu geringe mechanische Festigkeit bei der Gebrauchstemperatur auf, die z.B. bei besonders beanspruchten Motoren 200 °C und mehr erreichen kann. Die Verwendung von solchen duromeren, aber für hohe Temperaturanwendungen nicht geeigneten Backlacke sind in der DE-A 1 644 813 und DE-A 3 517 753 beschrieben.

Ferner ist die sogenannte Verbackungsfestigkeit der bisher bekannten Backlacke bei Nenntemperatur (> 150 °C) durchwegs nicht ausreichend was beispielsweise in

R. Steinhaus, Proc. of the 15th Electronic/Electrical Insulation Conference Chicago 1981, IEEE Publ. Nr. 81/CH 1717 - 8/81; S. 56 (1981)

und

R. Steinhaus, Proc. of the 18th Electronic/Electrical Insulation Conference Chicago 1987, IEEE Publ. Nr. 87/CH 2452-1, S. 152 (1987)

ausgeführt ist.

Aufgabe der vorliegenden Erfindung war es, ein Verfahren zu entwickeln, das es erlaubt, die oben genannten Nachteile zu umgehen, d.h. es sollte ein qualitativ hochwertiger Backlack gefunden werden, welcher bessere thermo-mechanische Eigenschaften als bislang bekannte Systeme aufweist.

Gelöst wurde die Aufgabe durch Polyamidlösungen, welche zusätzlich niedermolekulare Bismaleinimide als Vernetzer enthalten. Überraschenderweise zeigen diese Systeme bereits bei üblichen Verbackungstemperaturen im Vergleich zum Stand der Technik deutlich höhere Wiedererweichungstemperaturen und Verbackungsfestigkeiten.

Gegenstand der vorliegenden Erfindung ist ein Verfahren zur Herstellung von stabilen Schmelzklebelacklösungen für die Beschichtung von mit Elektroisolierlack beschichteten Drähten, indem man

A) 10 bis 50 Gew.% eines Polyamids und

B) 1 bis 30 Gew.% eines Bismaleinimides in

C) 20 bis 89 Gew.% eines organischen Lösungsmittels bei Temperaturen von 20 bis 180 °C unter fortwährender Durchmischung löst.

Zu den Aufbaukomponenten ist im einzelnen folgendes auszuführen:

Als Polyamide können beliebige Polyamide oder Mischpolyamide, wie sie beispielsweise in US-PS 3 975 671, US-PS 3 953 649, JP-A 78/81976, DE-A 3 612 372 und US-PS 4 420 535 beschrieben sind, verwendet werden.

Bevorzugt verwendet man aliphatische Polyamide, aliphatische und teilaromatische Polyamide mit einem Molekulargewicht von 4000 bis 40000, aufgebaut aus wiederkehrenden Einheiten der Formel I:

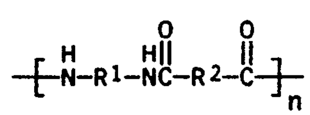

I,

in der $R^1$ einen geradkettigen Alkylenrest mit 2 bis 20, insbeonsdere 4 bis 10 Kohlenstoffatomen oder einen Trimethylhexamethylen-, 4,4′-Diphenyl-methan-, 2,4-Toluylen-, 1,3- oder 1,4-Phenylen-, 4,4′-Dicyclohexylmethan- oder 4,4′-(3,3′-Dimethyl)dicyclohexylmethanrest bezeichnet oder für den Rest

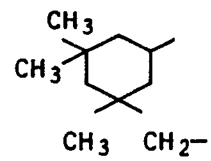

steht, und $R^2$ einen geradkettigen Alkylenrest mit 2 bis 20, insbesondere mit 4 bis 10 Kohlenstoffatomen oder einen 1,3- oder 1,4-Phenylenrest bezeichnet oder wiederkehrenden Einheiten der Einheiten der Formel II

$$-\!\!\left[\, \overset{H}{N}-R^3-\overset{O}{\overset{\|}{C}} \,\right]\!\!-\quad II,$$

in der $R^3$ einen geradkettigen Alkylenrest mit 2 bis 20, insbesondere mit 6 bis 10 Kohlenstoffatomen bezeichnet.

Mit Vorteil werden auch Mischpolyamide, aufgebaut aus wiederkehrenden Einheiten der Formel I und II verwendet.

Besonders bevorzugt sind Polycaprolactam (Polyamid 6) und Polyhexamethylenadipinamid (Polyamid 6,6), sowie deren Mischpolyamide.

Diese Polyamide haben ein Molekulargewicht von 4000 bis 40000, bevorzugt 15000 bis 25000. Die Komponente A) wird in Mengen von 10 bis 50 Gew.%, bevorzugt 12 bis 25 Gew.% verwendet, bezogen auf die Schmelzklebelacklösung aus A), B) und C).

Als Bismaleinimide können beliebige niedermolekulare Bismaleinimide mit verwendet werden. Vorteilhaft verwendet man Bismaleinimide der Formel III

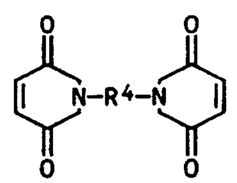

III

in der $R^4$ einen aliphatischen, cycloaliphatischen, aralphatischen oder aromatischen Rest bezeichnet, wobei die genannten Reste gegebenenfalls weitere funktionelle Gruppen wie Ether-, Ester-, Amid-, Carbamat- Keto-, Sulfon- oder Hydroxylgruppen aufweisen können.

Bevorzugt steht $R^4$ für einen geradkettigen Alkylenrest mit 2 bis 20, insbesondere 2 bis 10 Kohlenstoffatomen oder einen 4,4′-Diphenylmethan-, 2,4-Toluylen-, 1,3- oder 1,4-Phenylenrest.

Geeignete Bismaleinimide sind z.B. Ethylenbismaleinimid, Butylenbismaleinimid, Hexamethylenbismaleinimid, 4,4′-Diphenylmethanbismaleinimid, 2,4-Toluylenbismaleinimid und 1,3-Phenylenbismaleinimid. Besonders bevorzugt werden 4,4′-Diphenylmethanbismaleinimid oder 1,3-Phenylenbismaleinimid oder deren Gemische verwendet.

Die Bismaleinimidkomponente B) wird in Mengen von 1 bis 30 Gew.%, bevorzugt 1 bis 5 Gew.%, bezogen auf die Schmelzklebelacklösung aus A), B) und C) eingesetzt.

Als Komponente C) werden organische Lösungsmittel oder Lösungsmittelgemische verwendet. Als organische Lösungsmittel sind im allgemeinen geeignet $C_1$- bis $C_6$-Alkohole, insbesondere Alkanole wie i-Propanol oder Butanol, aromatische Alkohole wie Benzylalkohol, Phenole wie Phenol, Kresole und Xylenole, N-Methylpyrrolidon sowie Gemische dieser Lösungsmittel, gegebenenfalls im Gemisch mit aromatischen Kohlenwasserstoffen wie Toluol und Xylole und/oder Kohlenwasserstoffgemischen mit einem Siedepunkt von 80 bis 250 °C.

Bei Verwendung von aliphatischen Polyamiden als Polymidkomponente werden bevorzugt Lösungsmittelgemische, bestehend aus 40-70 Gew.% Kresol, 10-30 Gew.% n-Propanol und 0-50 Gew.% Xylol, bezogen auf die Komponente C), verwendet.

Bei Verwendung von teilaromatischen Polyamiden als Polyamidkomponente werden bevorzugt Lösungsmittelgemische, bestehend aus 50-100 Gew.% N-Methylpyrrolidon und 0-50 Gew.% Xylol, bezogen

auf die Komponente C), verwendet.

Die Komponenten A und B werden bei einer Temperatur von 20 bis 180 °C unter fortwährender Durchmischung, z.B. Rühren oder Umpumpen des Lösungsmittels, gelöst.

Zur Herstellung der erfindungsgemäßen Schmelzklebelacklösungen wird vorteilhaft das aliphatische Polyamid A) in dem Lösungsmittelgemisch C) unter Rühren bei 20 °C bis 180 °C, bevorzugt 40 bis 100 °C, über einen Zeitraum von bis zu 4 Stunden gelöst. Der Lösevorgang erübrigt sich, wenn z.B. im Falle teilaromatischer Polyamide aufgrund der Darstellungsart bereits eine Polyamidlösung zur Verfügung steht.

Anschließend wird die Komponente B) unter Rühren z.B. bei 20 °C bis 150 °C, bevorzugt 40 bis 80 °C, über einen Zeitraum von bis zu 2 Stunden gelöst. Die Lösungen weisen z.B. bei einem Feststoffgehalt von 18 Gew.% Viskositäten von 200 bis 1500 mPas auf und sind über mehrere Wochen lagerstabil. Den Lösungen können vorteilhaft in der Lackindustrie übliche Hilfsmittel wie Kollophonium, Benzotriazol usw. in Mengen z.B. bis zu 1 Gew.% zugesetzt werden.

Gleichfalls können die Komponenten A) und B) gemeinsam vorgelegt, bzw. erst die Komponente B) und dann die Komponente A) vorgelegt und wie oben beschrieben, weiter verarbeitet werden.

Die Applikation der erfindungsgemäßen Backlacklösungen erfolgt im allgemeinen auf Drähte aus Kupfer oder aus Aluminium, welche mit einer für die Elektroisolierung üblichen Isolierschicht aus hochtemperaturbeständigen Harzen, wie Polyesterimiden, Polyestern oder Polyamidimiden überzogen sind. Diese isolierten Drähte werden zur Trocknung der einzelnen Backlackschichten bei Einbrenntemperaturen z.B. von 200 bis 500 °C, bevorzugt 250 bis 350 °C und Lackiergeschwindigkeiten z.B. von 10 bis 30 m/s, bevorzugt 18 bis 22 m/s lackiert.

Auf diese Weise erhält man lagerstabile und wickelfeste Backlackdrähte, welche in Form der entsprechenden Spulenkörper bei 180 bis 210 °C durch Heißluft oder durch Stromwärme verbacken werden.

Die erfindungsgemäßen Polyamid-Lacklösungen mit Bismaleinimiden sind problemlos applizierbar und der fertige Backlack zeigt ein hohes Eigenschaftsniveau mit hohen Wiedererweichungstemperaturen und hoher Verbackungsfestigkeit.

Beispiel 1

14,46 g Polycaprolactam mit einem Molekulargewicht 15000-25000 wurden in einer Lösung aus 43,91 g Kresol (technisches Gemisch), 21,96 g n-Propanol und 16,06 g Xylol durch Rühren bei einer Temperatur von 80 °C innerhalb von 3 Stunden gelöst. Anschließend wurden 3,61 g 4,4′-Diphenylmethanbis maleinimid zugefügt und durch Rühren bei einer Temperatur von 80 °C innerhalb von 30 min gelöst.

Die Viskosität der Polyamidlösung betrug 760 mPas bei einem Feststoffgehalt von 18,07 Gew.%. Die Lösung war über Wochen lagerstabil.

Mit diesem Lack wurde ein mit einem handelsüblichen Polyesterimid-Grundlack beschichteter 0,315 mm Kupferdraht auf einer üblichen Drahtlackiermaschine lackiert. Eine verbackene Wickellocke zeigte folgende nach DIN 46 435 bestimmte Eigenschaften:

Lackierofen-Temperatur: vorne 320 °C; hinten 340 °C;

Verbackungsbedingungen: 30 Minuten bei 190 °C;

Wiedererweichungstemperatur: 231 °C.

Die Prüfung am sogenannten Drillstab (R. Steinhaus, Proc. of the 15th Electronic/Electrical Insulation Conference, Chicago 1981, IEEE Publ. Nr. 81/CH 1717 - 8/81; S. 56 (1981).

R. Steinhaus, Proc. of the 18th Electronic/Electrical Insulation Conference, Chicago 1987, IEEE Publ. Nr. 87/CH 2451-1, S. 152 (1987) zeigte folgende Hochtemperatur-Verbackungsfestigkeiten

| °C | Newton |
|---|---|
| 180 | 42 |
| 190 | 36 |
| 200 | 35 |
| 220 | 26 |

Vergleichsbeispiel 1

Man verwendet eine Lösung von Polyamid 6 wie in Beispiel 1 beschrieben, setzt kein 4,4′-Diphenylmethanbismaleinimid zu. Diese Lösung ergab bei gleichen Lackier- und Verbackungsbedingungen wie in Beispiel 1 eine Wiedererweichungstemperatur von 196° C. Die Verbackungsfestigkeit bei 180° C betrug 17 Newton.

Vergleichsbeispiel 2

Verwendet man unter den gleichen Lackierbedingungen wie in Beispiel 1 einen isocyanatvernetzten Polyamidbacklack gemäß Beispiel 1 der DE-A 35 17 750 wurden folgende Wiedererweichungstemperaturen erzielt:

| Verbackung 30 Minuten | Wiedererweichungstemperatur |
|---|---|
| 180° C | 193° C |
| 200° C | 207° C |

**Ansprüche**

1. Verfahren zur Herstellung lagerstabiler Schmelzklebelacklösungen für die Beschichtung von mit Elektroisolierlack beschichteten Drähten, dadurch gekennzeichnet, daß man
A) 10 bis 50 Gew.% eines Polyamids und
B) 1 bis 30 Gew.% eines Bismaleinimides in
C) 20 bis 89 Gew.% eines organischen Lösungsmittels
bei Temperaturen von 20 bis 180° C unter fortwährender Durchmischung löst.

2. Verfahren nach Anspruch 1, dadurch gekennzeichnet, daß man als Komponente A) Polyamide mit einem Molekulargewicht von 4 000 bis 40 000, aufgebaut aus wiederkehrenden Einheiten der Formel I

$$\left[ \overset{H}{N}-R^1-\overset{H}{N}\overset{O}{\overset{\|}{C}}-R^2-\overset{O}{\overset{\|}{C}} \right] \quad I,$$

in der $R^1$ einen geradkettigen Alkylenrest mit 2 bis 20 Kohlenstoffatomen oder einen Trimethylhexamethylen-, 4,4′-Diphenylmethan-, 2,4-Toluylen-, 1,3- oder 1,4-Phenylen-, 4,4′-Dicyclohexylmethan-, 4, 4′-(3,3′-Dimethyl)dicyclohexylmethanrest bezeichnet oder für einen Rest

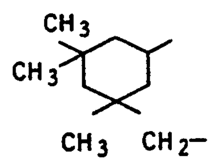

steht und $R^2$ einen geradketten Alkylenrest mit 2 bis 20 Kohlenstoffatomen oder einen 1,3- oder 1,4-Phenylenrest bezeichnet
oder wiederkehrenden Einheiten der Formel II

$$\left[ \overset{H}{N}-R^3-\overset{O}{\overset{\|}{C}} \right] \quad II$$

in der $R^3$ einen geradkettigen Alkylenrest mit 2 bis 20 Kohlenstoffatomen bezeichnet, verwendet.

3. Verfahren nach einem der Ansprüche 1 und 2, dadurch gekennzeichnet, daß man Mischpolyamide, aufgebaut aus wiederkehrenden Einheiten der Formeln I und II als Komponente A) verwendet.

4. Verfahren nach einem der Ansprüche 1 bis 3, dadurch gekennzeichnet, daß man als Polyamid, Polycaprolactam oder Polyhexamethylenadipinamid oder deren Mischpolyamide verwendet.

5. Verfahren nach einem der Ansprüche 1 bis 4, dadurch gekennzeichnet, daß man als Komponente B) Bismaleinimide der Formel III

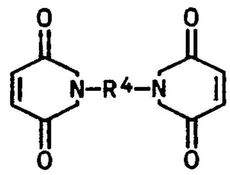 III,

in der $R^4$ einen geradkettigen Alkylenrest mit 2 bis 20 Kohlenstoffatomen oder einen 4,4′-Diphenylmethan-, 2,4-Toluylen-, 1,3- oder 1,4-Phenylenrest bezeichnet, verwendet.

6. Verfahren nach einem der Ansprüche 1 bis 5, dadurch gekennzeichnet, daß man als Bismaleinimide 4,4′-Diphenylmethylbismaleinimid oder 1,3-Phenylenbismaleinimid oder deren Gemische verwendet.

7. Verfahren nach einem der Ansprüche 1 bis 6, dadurch gekennzeichnet, daß man als Komponente C) aliphatische oder aromatische Alkohole, Phenole oder deren Gemische, gegebenenfalls im Gemisch mit Kohlenwasserstoffen mit einem Siedebereich von 80 bis 220 °C und/oder aromatischen Kohlenwasserstoffen verwendet.

8. Verfahren nach einem der Ansprüche 1 bis 7, dadurch gekennzeichnet, daß man als Komponente C) $C_1$ bis $C_6$-Alkohole, Kresole oder deren Gemische, gegebenenfalls im Gemisch mit Kohlenwasserstoffen mit einem Siedebereich von 80 bis 220 °C und/oder aromatischen Kohlenwasserstoffen verwendet.

9. Lagerstabile Schmelzklebelacklösungen, erhältlich nach einem Verfahren gemäß einen der Ansprüche 1 bis 8.

10. Mit einem Schmelzklebelack beschichteter Draht, erhältlich unter Verwendung einer Schmelzklebelacklösung gemäß Anspruch 9.

Patentansprüche für folgenden Vertragsstaat: ES

1. Verfahren zur Herstellung lagerstabiler Schmelzklebelacklösungen für die Beschichtung von mit Elektroisolierlack beschichteten Drähten, dadurch gekennzeichnet, daß man
A) 10 bis 50 Gew.% eines Polyamids und
B) 1 bis 30 Gew.% eines Bismaleinimides in
C) 20 bis 89 Gew.% eines organischen Lösungsmittels
bei Temperaturen von 20 bis 180 °C unter fortwährender Durchmischung löst.

2. Verfahren nach Anspruch 1, dadurch gekennzeichnet, daß man als Komponente A) Polyamide mit einem Molekulargewicht von 4 000 bis 40 000, aufgebaut aus wiederkehrenden Einheiten der Formel I

$$\left[ \overset{H}{N}-R^1-\overset{H}{N}\overset{O}{\overset{\|}{C}}-R^2-\overset{O}{\overset{\|}{C}} \right] \qquad I,$$

in der $R^1$ einen geradkettigen Alkylenrest mit 2 bis 20 Kohlenstoffatomen oder einen Trimethylhexamethylen-, 4,4′-Diphenylmethan-, 2,4-Toluylen-, 1,3- oder 1,4-Phenylen-, 4,4′-Dicyclohexylmethan-, 4, 4′-(3,3′-Dimethyl)dicyclohexylmethanrest bezeichnet oder für einen Rest

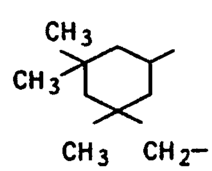

steht und $R^2$ einen geradketten Alkylenrest mit 2 bis 20 Kohlenstoffatomen oder einen 1,3- oder 1,4-Phenylenrest bezeichnet
oder wiederkehrenden Einheiten der Formel II

$$\left[ \overset{H}{N}-R^3-\overset{O}{\overset{\|}{C}} \right] \qquad II$$

in der $R^3$ einen geradkettigen Alkylenrest mit 2 bis 20 Kohlenstoffatomen bezeichnet, verwendet.

3. Verfahren nach einem der Ansprüche 1 und 2, dadurch gekennzeichnet, daß man Mischpolyamide, aufgebaut aus wiederkehrenden Einheiten der Formeln I und II als Komponente A) verwendet.

4. Verfahren nach einem der Ansprüche 1 bis 3, dadurch gekennzeichnet, daß man als Polyamid, Polycaprolactam oder Polyhexamethylenadipinamid oder deren Mischpolyamide verwendet.

5. Verfahren nach einem der Ansprüche 1 bis 4, dadurch gekennzeichnet, daß man als Komponente B)

Bismaleinimide der Formel III

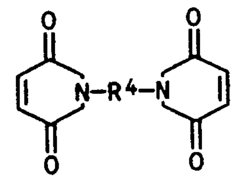

III,

in der $R^4$ einen geradkettigen Alkylenrest mit 2 bis 20 Kohlenstoffatomen oder einen 4,4′-Diphenylmethan-, 2,4-Toluylen-, 1,3- oder 1,4-Phenylenrest bezeichnet, verwendet.

6. Verfahren nach einem der Ansprüche 1 bis 5, dadurch gekennzeichnet, daß man als Bismaleinimide 4,4′-Diphenylmethylbismaleinimid oder 1,3-Phenylenbismaleinimid oder deren Gemische verwendet.

7. Verfahren nach einem der Ansprüche 1 bis 6, dadurch gekennzeichnet, daß man als Komponente C) aliphatische oder aromatische Alkohole, Phenole oder deren Gemische, gegebenenfalls im Gemisch mit Kohlenwasserstoffen mit einem Siedebereich von 80 bis 220 °C und/oder aromatischen Kohlenwasserstoffen verwendet.

8. Verfahren nach einem der Ansprüche 1 bis 7, dadurch gekennzeichnet, daß man als Komponente C) $C_1$ bis $C_6$-Alkohole, Kresole oder deren Gemische, gegebenenfalls im Gemisch mit Kohlenwasserstoffen mit einem Siedebereich von 80 bis 220 °C und/oder aromatischen Kohlenwasserstoffen verwendet.

9. Verfahren zur Herstellung eines mit einem Schmelzklebelack beschichteten Drahtes, dadurch gekennzeichnet, daß man eine Schmelzklebelacklösung gemäß Anspruch 9 verwendet.